# FASCICULE DE BREVET EUROPEEN

(11) **EP 2 055 382 B1**
(45) Date de publication et mention de la délivrance du brevet: **06.06.2012**
(21) Numéro de dépôt: 08290954.0
(22) Date de dépôt: 09.10.2008
(51) Int. Cl.: C10G 50/00, B01J 29/70, B01J 29/78, C10G 3/00, C10G 49/00, B01J 29/76

(54) **Utilisation d'un catalyseur à base d'IM-5 pour la transformation d'alcools ayant au moins deux atomes de carbone en base carburants diesel**
Verwendung eines Katalysators auf IM-5-Basis für die Umformung von Alkoholen, die mindestens zwei Kohlenstoffatome auf Dieselkraftstoffbasis besitzen
Use of an IM-5 based catalyst for transforming alcohols having at least two carbon atoms from the base of diesel fuels

(30) Priorité: 22.10.2007 FR 0707370
(43) Date de publication de la demande: 06.05.2009
(73) Titulaire: IFP Energies nouvelles, 92852 Rueil-Malmaison Cedex (FR)
(72) Inventeur: Guillon, Emmanuelle, 69390 Vernaison (FR); Maury, Sylvie, 69390 Charly (FR); Cadran, Nicolas, 69600 Ollins (FR)

(56) Documents cités:
- FR-A- 2 754 809
- US-B1- 6 372 949
- CHRISTIAN BAERLOCHER ET AL: "Structure of the Polycrystalline Zeolite Catalyst IM-5 Solved by Enhanced Charge Flipping" SCIENCE, vol. 315, no. 5815, 23 février 2007 (2007-02-23), pages 1113-1116, XP002483875

## Description

### Domaine de l'invention

La présente invention concerne la transformation d'alcools ayant au moins 2 atomes de carbone en base pour carburant diesel. Elle concerne plus particulièrement un procédé catalytique de transformation de l'éthanol, pur ou contenant de l'eau, en base pour carburant diesel.

### Art antérieur

La réaction à la base du procédé de transformation de l'éthanol en base pour carburant diesel est la déshydratation-oligomérisation en une étape de l'éthanol selon l'équation (1) ci-dessous :

2 C₂H₅OH → 2CH₂=CH₂ + 2 H₂O → oligomérisation/cyclisation (1)

(aromatiques, paraffines, oléfines, etc.)

La réaction de transformation de l'éthanol pour produire des hydrocarbures a été étudiée principalement sur la zéolithe ZSM-5. L'objectif premier étant de produire des effluents de type essence, aucun auteur ne s'est attaché à optimiser le rendement en hydrocarbures liquides de point d'ébullition supérieur à 150°C, c'est-à-dire des hydrocarbures valorisables dans la coupe gazole.
Les brevets de l'art antérieur font état de catalyseurs zéolithiques principalement à base de ZSM-5 qui mènent à des effluents principalement aromatiques.
Par ailleurs, de nombreux brevets concernent préférablement la conversion du méthanol.
Le brevet US 3,899,544 décrit un procédé de transformation d'alcools et/ou d'éthers sur catalyseurs zéolithiques, en particulier ZSM-5.
Le brevet US 4,621,164 décrit un procédé de conversion de l'éthanol pour la production de bases essence.
US 6, 372, 949 décrit un procédé en une étape utilisant un catalyseur composite comprenant une zéolithe monodimentionnelle 10 MR (choisie dans le groupe formé par la ZSM 22, ZSM 23, ZSM 35, ZSM 48, ZSM 57 et ferriérite), seule ou en mélange avec une zéolithe multidimentionnelle ayant des taille de pore moyenne (en particulier la ZSM-5), ce qui permet de modifier le rendement en distillats.

Un objectif du procédé selon l'invention est de transformer des charges constituées d'alcools ayant au moins 2 atomes de carbone, majoritairement en bases hydrocarbures pouvant être valorisées dans le "pool diesel" en une ou deux étapes réactionnelles.

On appelle communément "pool diesel", l'ensemble des hydrocarbures dont le point d'ébullition varie entre 150°C et 370°C. Il est connu de l'homme du métier que le gazole est caractérisé essentiellement par sa volatilité et par son indice de cétane. Il est également connu que l'indice de cétane est favorisé par la présence d'hydrocarbures linéaires ayant un faible taux de branchement, défavorisé par la présence d'aromatiques et de chaînes très ramifiées, et enfin très défavorisé par la présence d'hydrocarbures contenant plusieurs noyaux aromatiques, éventuellement adjacents tel que par exemple le naphtalène.

Les travaux de recherche effectués par le demandeur sur de nombreuses zéolithes et solides microporeux cristallisés l'ont conduit à découvrir, de façon surprenante, qu'un catalyseur contenant au moins une zéolithe IM-5 permet d'atteindre une activité catalytique et des sélectivités en gazole nettement améliorées par rapport aux catalyseurs contenant les zéolithes connues de l'art antérieur.

### Objet de l'invention

Plus précisément, l'invention a pour objet un procédé de transformation d'une charge constituée d'alcools ayant au moins 2 atomes de carbone, en base pour carburant gazole, caractérisé en ce qu'il comprend : - une étape réactionnelle a) de mise en contact de la charge à traiter avec un catalyseur comprenant au moins une matrice de type oxyde et au moins une zéolithe IM-5 et une phase métallique comprenant uniquement du nickel, produisant une phase gazeuse, une phase liquide organique et une phase liquide aqueuse.

### Description détaillée de l'invention

L'invention décrit un procédé de transformation d'une charge constituée d'alcools ayant au moins 2 atomes de carbone, en base pour carburant gazole. Le procédé selon l'invention est un procédé de transformation d'une charge constituée d'alcools ayant au moins 2 atomes de carbone, ladite charge étant de préférence l'éthanol. Ladite charge peut éventuellement être issue de la biomasse.
La charge du procédé selon l'invention contient, de préférence, de l'alcool et une quantité variable d'eau, la proportion d'alcool et de préférence en éthanol étant de préférence supérieure à 40 % en masse et de manière préférée supérieure à 90% en masse.

Selon l'invention, l'étape réactionnelle a) du procédé selon l'invention est réalisée en une seule étape ou en deux étapes.

Dans le cas où l'étape réactionnelle a) du procédé selon l'invention est réalisée en une seule étape, ladite étape réactionnelle a) opère à une température comprise entre 250 et 450°C et de préférence comprise entre 300 et 400°C, sous une pression comprise entre 20 et 100 bar, de préférence comprise entre 20 et 60 bar, avec une vitesse pondérale horaire (poids de charge par poids de catalyseur et par heure) compris entre 0,1 et 5 h⁻¹, de préférence comprise entre 0,5 et 3 h⁻¹.

De préférence, le procédé comprend également une étape de séparation b) de ladite phase gazeuse, ladite phase liquide organique et ladite phase liquide aqueuse, issues de l'étape réactionnelle a).

Ladite étape b) de séparation est avantageusement réalisée dans des conditions connues de l'Homme du métier.

De préférence, la phase liquide organique issue de l'étape de séparation b) subit une étape d'hydrogénation dans laquelle ladite phase liquide organique est mise en contact avec un catalyseur classique d'hydrogénation dans des conditions d'hydrogénation connues de l'Homme du métier.

Dans le cas où l'étape réactionnelle a) du procédé selon l'invention est réalisée en deux étapes, les deux étapes sont les suivantes :
- une première étape réactionnelle de déshydratation 1) de mise en contact de la charge à traiter avec un catalyseur de déshydratation, produisant une phase gazeuse, une phase liquide à 25°C majoritairement composée d'eau,
- une deuxième étape réactionnelle d'oligomérisation 2) de mise en contact de ladite phase gazeuse, issue de la première étape réactionnelle a), avec un catalyseur comprenant au moins une matrice de type oxyde et au moins une zéolithe IM-5, produisant une phase liquide organique.
   De préférence, une étape de séparation b) est mise en oeuvre entre ladite première étape réactionnelle de déshydratation 1) et ladite deuxième étape réactionnelle d'oligomérisation 2), dans laquelle l'eau contenue dans la phase liquide issue de ladite première étape réactionnelle est séparée de ladite phase gazeuse.

Selon l'invention, ladite première étape réactionnelle de déshydratation 1) opère à une température comprise entre 200 et 500°C, de préférence comprise entre 300 et 400°C, sous une pression comprise entre 1 et 50 bar, de préférence comprise entre 1 et 20 bar, avec une vitesse pondérale horaire (poids de charge par poids de catalyseur et par heure) compris entre 0,1 et 10 h⁻¹, de préférence compris entre 0,5 et 5 h⁻¹.

Les catalyseurs de déshydratation utilisés dans la première étape réactionnelle de déshydratation 1) sont des catalyseurs connus de l'homme du métier et classiquement mis en oeuvre tels que par exemples les catalyseurs à base de zéolithes, à base d'oxydes métalliques de type Al₂O₃ ou TiO₂ ou à base d'acides minéraux tels que par exemple l'acide phosphorique ou les hétéropolyacides. De préférence, les dits catalyseurs de déshydratation sont de type aluminique et de manière très préférée, lesdits catalyseurs sont choisis parmi les alumines eta et gamma.

Selon l'invention, ladite deuxième étape réactionnelle d'oligomérisation 2) opère à une température comprise entre 250 et 450°C et de préférence comprise entre 300 et 400°C, sous une pression comprise entre 20 et 100 bar, de préférence comprise entre 20 et 60 bar, avec une vitesse pondérale horaire (poids de charge par poids de catalyseur et par heure) compris entre 0,1 et 5 h⁻¹, de préférence compris entre 0,5 et 3 h⁻¹.

De préférence, la phase liquide organique issue de la deuxième étape réactionnelle d'oligomérisation b) subit une étape d'hydrogénation dans laquelle ladite phase liquide organique est mise en contact avec un catalyseur classique d'hydrogénation dans des conditions d'hydrogénation connues de l'Homme du métier.

Le procédé selon l'invention est mis en oeuvre dans tout type de réacteur connu de l'homme du métier. Ledit procédé peut avantageusement être réalisé en lit fixe, mobile
ou lit fluidisé et de préférence en lit fixe.

Dans le cas où l'étape réactionnelle a) du procédé selon l'invention est avantageusement réalisée en une seule étape, l'effluent issu de ladite étape réactionnelle a) est avantageusement introduit dans un dispositif de séparation (étape b) permettant la séparation triphasique d'une phase gazeuse constituée notamment d'éthylène, d'une phase liquide organique (essence et gazole) et d'un liquide aqueux (eau, éthanol non réagi, hydrocarbures solubilisés). La température du séparateur est en général choisie de manière à récupérer au moins 80 % de la fraction gazole produite dans la réaction. Elle peut être par exemple de 60 à 200°C, pour une pression d'environ 30 bar.

Dans le cas où l'étape réactionnelle a) du procédé selon l'invention est réalisée en deux étapes, on peut avantageusement utiliser un ou plusieurs réacteurs. Dans le cas
où on utilise avantageusement un seul réacteur, celui ci peut être constitué d'un ou plusieurs lit fixe ou d'un ou plusieurs lits mobiles. Un séparateur peut avantageusement être installé entre le réacteur mettant en oeuvre ladite première étape réactionnelle de déshydratation a) c'est-à-dire la transformation de l'alcool en hydrocarbures légers (majoritairement de l'éthylène) et le réacteur mettant en oeuvre ladite deuxième étape réactionnelle d'oligomérisation b) c'est-à-dire la transformation de ces hydrocarbures en composés plus lourds.

La phase aqueuse en sortie du séparateur est majoritairement constituée d'eau et d'hydrocarbures solubilisés.

### caractéristiques du catalyseur

Le catalyseur utilisé dans le procédé selon la présente invention, comprend :
- au moins une zéolithe IM-5,
- au moins une matrice de type oxyde également appelée liant,
- et une phase métallique comprenant uniquement du nickel.

Le catalyseur contient également éventuellement un métal alcalin choisi parmi le potassium et le sodium.

### caractéristiques de la zéolithe

Selon l'invention, ledit catalyseur comprend au moins une zéolithe IM-5.

Ladite zéolithe IM-5 utilisée dans le procédé selon la présente invention est décrite dans le brevet FR 2 754 809. C'est une zéolithe à pores moyens (10MR, bidimensionnelle), telle que décrit dans Science, vol 315, 23 février 2007. L'invention comprend aussi toute zéolithe de même type structural que celui de la zéolithe IM-5.

La composition chimique de structure zéolithique IM-5 est avantageusement exprimée sur une base anhydre, en termes de rapports molaires d'oxydes, par la formule :
100 XO₂, m Y₂O₃, p R_{2/n}O,
où m est égal ou inférieur à 10,
p est compris entre 0 (exclu) et 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, de préférence Y est l'aluminium ou le fer,

La zéolithe IM-5 dans sa forme hydrogène, désignée H-IM-5, est avantageusement obtenue par calcination(s) et/ou échange(s) ionique(s), comme explicité ci-après.

La zéolithe IM-5 utilisée dans le procédé selon la présente invention peut être avantageusement utilisée sous sa "forme brute de synthèse", ainsi que sous des formes obtenues par calcination et/ou échange d'ions. L'expression "sous sa forme brute de synthèse" désigne le produit avantageusement obtenu par synthèse et par lavage. Sous sa "forme brute de synthèse", la zéolithe IM-5 peut avantageusement comporter un cation de métal M alcalin, choisi dans le groupe formé par le sodium et/ou le potassium, et elle peut avantageusement comporter des cations organiques azotés tels que ceux décrits ci-après ou leurs produits de décomposition, ou encore leurs précurseurs. Ces cations organiques azotés sont désignés ici par la lettre Q, qui inclut aussi les produits de décomposition et les précurseurs desdits cations organiques azotés.

Les formes calcinées de la zéolithe IM-5 utilisée dans le procédé selon la présente invention ne contiennent avantageusement pas de composé organique azoté, ou en quantité moindre que la "forme brute de synthèse", dans la mesure où la substance organique est éliminée en majeure partie, généralement par un traitement thermique consistant à brûler la substance organique en présence d'air.

La zéolithe brute de synthèse calcinée peut être soumise à un échange ionique (NH4+), puis à une calcination, cette étape permettant d'obtenir la forme hydrogène, c'est à dire la forme acide, appelée H-IM-5.

La zéolithe IM-5 utilisée dans le procédé selon la présente invention est avantageusement au moins en partie sous forme acide (telle que définie ci-dessus) ou NH₄⁺, de préférence au moins en partie sous forme acide.

La zéolithe IM-5 utilisée dans le procédé selon la présente invention est avantageusement au moins en partie et de préférence pratiquement totalement, sous forme acide ou partiellement échangée avec des cations métalliques, par exemple des cations des métaux alcalins ou alcalino-terreux.

Les zéolithes IM-5 utilisée dans le procédé selon la présente invention sont alors avantageusement utilisées avec les teneurs en silicium et aluminium obtenues à la synthèse.

On peut également avantageusement utiliser la zéolithe IM-5 désaluminée dans le procédé selon la présente invention, ladite zéolithe IM-5 désaluminée étant décrite dans le demande de brevet FR-2, 758, 810. Ladite zéolithe IM-5 désaluminée utilisée dans le procédé selon la présente invention présente un rapport Si/Al atomique global supérieur à 5, de préférence supérieur à 10.

Lorsqu'elle est comprise dans le catalyseur utilisé dans le procédé selon la présente invention, la zéolithe IM-5 est avantageusement au moins en partie et de préférence pratiquement totalement, sous forme acide. Le rapport atomique M/Al (ou M est la cation alcalin sodium ou potassium) est généralement avantageusement inférieur à 0,45 et de préférence inférieur à 0,30 et de manière encore plus préférée inférieur à 0,15.

Pour préparer la zéolithe IM-5 désaluminée utilisée dans le procédé selon la présente invention, au moins deux méthodes de désalumination peuvent avantageusement être employées, à partir de la zéolithe IM-5 brute de synthèse comprenant du structurant organique. Elles sont décrites ci-après. Mais toute autre méthode connue de l'homme du métier peut aussi être employée.

Une première méthode de désalumination dite de l'attaque acide directe comprend avantageusement une première étape de calcination sous flux d'air sec, à une température généralement comprise entre environ 450 et 550°C, qui a pour but d'éliminer le structurant organique présent dans la microporosité de la zéolithe, suivie d'une deuxième étape de traitement par une solution aqueuse d'un acide minéral tel que par exemple HNO₃ ou HCl ou organique tel que CH₃CO₂H. Cette deuxième étape peut avantageusement être répétée autant de fois qu'il est nécessaire afin d'obtenir le niveau de désalumination voulu. Entre ces deux étapes il est avantageusement possible de réaliser un ou plusieurs échanges ioniques par au moins une solution NH₄NO₃, de manière à éliminer au moins en partie, de préférence pratiquement totalement, le cation alcalin, en particulier le sodium. De même, à la fin du traitement de désalumination par attaque acide directe, il est éventuellement possible de réaliser un ou plusieurs échanges ioniques par au moins une solution NH₄NO₃, de manière à éliminer les cations alcalins résiduels et en particulier le sodium.

Pour atteindre le rapport Si/Al désiré, il est nécessaire de bien choisir les conditions opératoires ; de ce point de vue les paramètres les plus critiques sont la température de traitement par la solution aqueuse d'acide, la concentration dudit acide, la nature dudit acide, le rapport entre la quantité de solution acide et la masse de zéolithe traitée, la durée de traitement et le nombre de traitements réalisés.

Une deuxième méthode dite de traitement thermique (en particulier à la vapeur d'eau
ou "steaming") + attaque acide, comprend avantageusement, dans un premier temps, la calcination sous flux d'air sec, à une température généralement comprise entre environ 450 et 550°C, qui a pour but d'éliminer le structurant organique occlus dans la microporosité de la zéolithe. Puis le solide ainsi obtenu est avantageusement soumis à un ou plusieurs échanges ioniques par au moins une solution NH₄NO₃, de manière à éliminer au moins en partie, de préférence pratiquement totalement, le cation alcalin, en particulier le sodium, présent en position cationique dans la zéolithe.

La zéolithe ainsi obtenue est avantageusement soumise à au moins un cycle de désalumination de charpente, comportant au moins un traitement thermique réalisé, éventuellement et de préférence en présence de vapeur d'eau, à une température généralement comprise entre 550 et 900°C, et éventuellement suivie d'au moins une attaque acide par une solution aqueuse d'un acide minéral ou organique. Les conditions de calcination en présence de vapeur d'eau (température, pression de vapeur d'eau et durée du traitement) ainsi que les conditions d'attaque acide post-calcination (durée de l'attaque, concentration de l'acide, nature de l'acide utilisé et le rapport entre le volume d'acide et la masse de zéolithe), sont avantageusement adaptées de manière à obtenir le niveau de désalumination souhaité. Dans le même but on peut aussi avantageusement jouer sur le nombre de cycles traitement thermique-attaque acide qui sont effectués.

Le cycle de désalumination de la charpente, comportant au moins une étape de traitement thermique réalisé, éventuellement et de préférence, en présence de vapeur d'eau et au moins une étape d'attaque en milieu acide de la zéolithe IM-5, peut avantageusement être répété autant de fois qu'il est nécessaire pour obtenir la zéolithe IM-5 désaluminée possédant les caractéristiques désirées. De même, suite au traitement thermique réalisé, éventuellement et de préférence en présence de vapeur d'eau, plusieurs attaques acides successives, avec des solutions en acide de concentrations différentes, peuvent avantageusement être opérées.

Une variante de cette deuxième méthode de calcination peut avantageusement consister à réaliser le traitement thermique de la zéolithe IM-5 contenant le structurant organique, à une température généralement comprise entre 550 et 850°C, éventuellement et de préférence en présence de vapeur d'eau. Dans ce cas les étapes de calcination du structurant organique et de désalumination de la charpente sont avantageusement réalisées simultanément. Puis, la zéolithe est éventuellement traitée par au moins une solution aqueuse d'un acide minéral (par exemple de HNO₃
ou de HCl) ou organique (CH₃CO₂H par exemple). Enfin, le solide ainsi obtenu peut être éventuellement soumis à au moins un échange ionique par au moins une solution NH₄NO₃, de manière à éliminer pratiquement tout cation alcalin, en particulier le sodium, présent en position cationique dans la zéolithe.

La zéolithe IM-5 est alors avantageusement utilisée avec le rapport Si/Al obtenue après désalumination.

Selon l'invention, ledit catalyseur comprend également au moins une matrice de type oxyde également appelé liant. On entend par matrice selon l'invention, une matrice amorphe ou mal cristallisée.
Ladite matrice est avantageusement choisie parmi les éléments du groupe formé par les argiles (telles que par exemple parmi les argiles naturelles telles que le kaolin ou la bentonite), la magnésie, les alumines, les silices, les silice-alumines, les aluminates, l'oxyde de titane, l'oxyde de bore, la zircone, les phosphates d'aluminium, les phosphates de titane, les phosphates de zirconium, et le charbon. De préférence ladite matrice est choisie parmi les éléments du groupe formé par les alumines et les argiles, de manière plus préférée ladite matrice est choisie parmi les alumines, et de manière encore plus préférée ladite matrice est l'alumine gamma.

Le catalyseur utilisé dans le procédé selon la présente invention comprend une phase métallique comprenant uniquement du nickel.

Ledit catalyseur utilisé dans le procédé selon la présente invention comprend avantageusement, en % poids par rapport à la masse totale du catalyseur :
- 1 à 95 % et de préférence de 20 à 80% de zéolithe IM-5,
- 5 à 99 % et de préférence de 20 à 80% d'au moins une matrice,
- de 0 à 10% et de préférence de 0 à 3% de l'élément du groupe VIII, nickel

Le métal du groupe VIII du catalyseur utilisé dans le procédé selon la présente invention peut être présent en totalité ou partiellement sous forme métallique et/ou oxyde.

### Procédé de préparation du catalyseur

Le catalyseur utilisé dans le procédé selon la présente invention peut avantageusement être préparé par toutes les méthodes bien connues de l'homme du métier. Avantageusement, il est obtenu par mélange de la matrice et de la zéolithe puis le mélange est mis en forme. Le métal est introduit lors du mélange, ou de manière préférée après mise en forme. La mise en forme est avantageusement suivie d'une calcination, et l'élément métallique est avantageusement introduit avant
ou après cette calcination. La préparation se termine avantageusement par une calcination à une température de 250 à 600°C. Une des méthodes préférées selon la présente invention consiste avantageusement à malaxer la poudre de zéolithe IM-5 dans un gel humide d'alumine pendant quelques dizaines de minutes, puis à passer la pâte ainsi obtenue à travers une filière pour former des extrudés de diamètre compris entre 0,4 et 4 mm.

Le métal de la fonction métallique assurée uniquement par le nickel peut avantageusement être introduit en partie seulement ou en totalité au moment du malaxage de la zéolithe, c'est à dire la zéolithe IM-5, avec le gel d'oxyde choisi comme matrice.

Ledit métal peut avantageusement être introduit par une ou plusieurs opérations d'échange ionique sur le support calciné constitué d'une zéolithe IM-5, dispersée dans la matrice choisie, à l'aide de solutions contenant les sels précurseurs des métaux choisis.

Ledit métal peut avantageusement être introduit par une ou plusieurs opérations d'imprégnation du support mis en forme et calciné, par une solution contenant au moins un précurseur d'au moins un oxyde d'au moins ledit métal.

L'imprégnation de ladite matrice est avantageusement, effectuée par la méthode d'imprégnation dite "à sec" bien connue de l'homme du métier. L'imprégnation peut être avantageusement effectuée en une seule étape par une solution contenant l'ensemble des éléments constitutifs du catalyseur final.

Afin de terminer la préparation du catalyseur, on laisse avantageusement reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C.

Les sources de l'élément du groupe VIII qui peuvent être utilisées sont bien connues de l'homme du métier. Par exemple, on utilise le nitrate de nickel, les sulfates, les phosphates, les halogénures par exemple, les chlorures, bromures et fluorures, et les carboxylates tels que par exemple les acétates et les carbonates.

Les catalyseurs obtenus par le procédé de préparation décrits ci dessus sont avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues, de sphères.

### Exemple 1 : Préparation d'une zéolithe Z1 à base de zéolithe IM-5

La zéolithe IM-5 utilisée dans cet exemple, est celle dont la préparation est décrite dans l'exemple 1 du brevet FR 2 754 809.
Le produit obtenu est calciné sous azote pendant 24 heures à 550°C; cette étape a été immédiatement suivie d'une seconde calcination sous air à 450°C, pendant 24 heures.
La substance obtenue a ensuite été mise en contact pendant 2 heures à température ambiante avec une solution aqueuse à 1 mole de chlorure d'ammonium en utilisant 50 ml de solution par gramme de produit calciné solide. La substance a ensuite été filtrée, lavée à l'eau permutée et séchée à 110°C. Ce traitement a été répété 3 fois. La substance a ensuite été calcinée sous air pendant 24 heures, à 550°C. On obtient ainsi la zéolithe Z1.

### Exemple 2A : Préparation d'une zéolithe Z2 à base de zéolithe et incorporation du nickel dans une zéolithe IM-5

La zéolithe IM-5 utilisée est celle décrite dans l'exemple 1. La méthode d'incorporation du métal choisi dans les exemples 2A et 2B est une imprégnation à sec. Elle est soumise à une étape d'imprégnation à sec par une solution aqueuse de nitrate de nickel. La zéolithe est ensuite séchée à 110°C pendant 18 heures puis calciné sous air pendant 12 heures à 550°C. La teneur pondérale en nickel du catalyseur Z2 ainsi obtenu est de 0,23%.

### Exemple 2B (Comparatif) : Préparation d'une zéolithe Z3 à base de zéolithe et incorporation du chrome dans une zéolithe IM-5

La zéolithe IM-5 utilisée est celle décrite dans l'exemple 1.
Elle est soumise à une étape d'imprégnation à sec par une solution aqueuse de nitrate de chrome. La zéolithe est ensuite séchée à 110°C pendant 18 heures puis calciné sous air pendant 12 heures à 550°C. La teneur pondérale en chrome du catalyseur Z3 ainsi obtenu est de 0,23%.

### Exemple 3 : Mise en forme des catalyseurs C1, C2 et C3.

Les catalyseurs C1 comparatif, C2 selon l'invention, C3 comparatif sont préparés respectivement à partir des zéolithes Z1, Z2 et Z3.

La zéolithe est malaxée avec un gel d'alumine de type SB3 fourni par la société Sasol. La pâte malaxée est alors extrudée au travers d'une filière de diamètre 1,4 mm. Les extrudés ainsi obtenus sont calcinés à 500°C pendant 2 heures sous air. La teneur pondérale en zéolithe est de 60% poids.

### Exemple 4 : test catalytique selon l'invention - comparaison de différentes compositions de l'IM-5

On charge une unité pilote en lit fixe traversé avec 15 g de catalyseur C₁, C₂, ou C₃.
Avant le test catalytique, on a procédé à l'activation du catalyseur à 550°C sous air durant 2 h. Cette activation consiste en une calcination visant à la combustion des traces d'huile, de graisse et au séchage du catalyseur avant son utilisation.
On injecte 18 g/h d'éthanol sur le catalyseur, avec une dilution à l'azote (azote d'entrée et de sortie ôté du calcul de bilan) de 20NI/h. A la sortie du réacteur, on procède à la séparation de la phase gaz, de la phase liquide organique et de la phase liquide aqueuse. Les conditions de réaction utilisées sont les suivantes : une température de 350°C, le réacteur étant isotherme, et une pression de 3 MPa.

**Tableau 2 : Comparaison de l'activité de différentes zéolithes IM-5 modifiées par l'introduction de métaux**

| Zéolithe | | C1 (IM-5) | C2 (IM-5/Ni) | C3 (IM-5/Cr) |
|---|---|---|---|---|
| | Si/Al | 15,5 | 15,5 | 15,5 |
| | | | | |

| Conditions | | | | |
|---|---|---|---|---|
| | T (°C) | 350 | 350 | 350 |
| | P (bar) | 30 | 30 | 30 |
| | vph (h⁻¹) | 1,2 | 1,2 | 1,2 |
| | Temps de réaction (h) | 9 | 9 | 9 |
| | | | | |
| Conversion éthanol | | 99,5% | 99,5% | 99,7% |
| | | | | |

| Répartition des produits (%pds) | | | | |
|---|---|---|---|---|
| | gaz | 22,1% | 18,6% | 18,3% |
| | liquide (bp<150°C) | 25,0% | 24,3% | 26,8% |
| | liquide (bp>150°C) | 53,9% | 56,1% | 54,9% |
| | | | | |
| Rapport massique Aromatiques/Oléfines | | 1,05 | 0,78 | 0,85 |

On remarque qu'un catalyseur utilisé dans le procédé selon l'invention présentant une phase métallique, ladite phase métallique étant le nickel, conduit à une proportion en produits ayant un point d'ébullition supérieur à 150°C, c'est à dire valorisable dans le "pool diesel", plus élevée et un rapport aromatiques / oléfines plus faible que les catalyseurs selon la présente invention ne contenant pas de phase métallique.

### Exemple 5 : test catalytique selon l'invention - comparaison de C2 (IM-5/Ni) et de la ferrierite.

**Tableau 3 : Comparaison de l'activité de C2 (IM-5/Ni) et de la ferriérite**

| Catalyseur | | C5 (ferriérite) | C2 (IM-5/Ni) |
|---|---|---|---|
| | Si/Al | | 15,5 |
| | | | |

| Conditions | | | |
|---|---|---|---|
| | T (°C) | 350 | 350 |
| | P (bar) | 30 | 30 |
| | vph (h⁻¹) | 1,2 | 1,2 |
| | Temps de réaction (h) | 5 | 5 |
| | | | |
| Conversion éthanol | | 99,5% | 99,8% |
| | | | |

| Répartition des produits | | | |
|---|---|---|---|
| | gaz | 65% | 27,3% |
| | liquide (bp<150°C) | 23% | 22,8% |
| | liquide (bp>150°C) | 12% | 49,9% |
| | | | |
| Rapport massique Aromatiques/Oléfines | | 1,25 | 0,78 |

On remarque que l'utilisation d'un catalyseur utilisé dans le procédé selon la présente invention contenant une zéolithe IM-5 et une phase métallique à base de Nickel (C2) conduit non seulement à une proportion plus élevée en produit ayant un point d'ébullition supérieur à 150°C, c'est à dire valorisable dans le "pool diesel" mais aussi à un rapport massique Aromatiques/Oléfines plus faible, caractéristique d'une fraction gazole de bonne qualité, que l'utilisation d'un catalyseur à base de ferriérite (C5) qui lui conduit à la formation d'une plus grande quantité en aromatiques ayant un effet négatif sur l'indice de cétane et d'une plus grande quantité de gaz non désiré (majoritairement de l'éthylène non oligomérisé).

## Revendications

1. Procédé de transformation d'une charge constituée d'alcools ayant au moins 2 atomes de carbone, en base pour carburant gazole, **caractérisé en ce qu'**il comprend :
- une étape réactionnelle a) de mise en contact de la charge à traiter avec un catalyseur comprenant au moins une matrice de type oxyde, et-au moins une zéolithe IM-5, et une phase métallique comprenant uniquement du nickel, produisant une phase gazeuse, une phase liquide organique et une phase liquide aqueuse, ladite étape réactionnelle étant réalisée soit en une seule étape et opérant à une température comprise entre 250 et 450°C, sous une pression comprise entre 20 et 100 bar, avec une vitesse pondérale horaire comprise entre 0,1 et 5 h⁻¹, soit ladite étape réactionnelle étant réalisée en deux étapes, les deux étapes étant les suivantes :
- - une première étape réactionnelle de déshydratation 1) de mise en contact de la charge à traiter avec un catalyseur de déshydratation, opèrant à une température comprise entre 200 et 500°C, sous une pression comprise entre 1 et 50 bar, avec une vitesse pondérale horaire compris entre 0,1 et 10 h-1 et produisant une phase gazeuse, une phase liquide à 25°C majoritairement composée d'eau,
- - une deuxième étape réactionnelle d'oligomérisation 2) de mise en contact de ladite phase gazeuse, issue de la première étape réactionnelle a), avec un catalyseur comprenant au moins une matrice de type oxyde et au moins une zéolithe IM-5, produisant une phase liquide organique et opérant à une température comprise entre 250 et 450°C, sous une pression comprise entre 20 et 100 bar, avec une vitesse pondérale horaire comprise entre 0,1 et 5 h-1.

2. Procédé selon la revendication 1 **caractérisé en ce que** la charge est l'éthanol.

3. Procédé selon l'une des revendications 1 ou 2 **caractérisé en ce** dans le cas où ladite étape réactionnelle a) est réalisée en une seule étape, qu'il comprend également une étape de séparation b) de ladite phase gazeuse, ladite phase liquide organique et ladite phase liquide aqueuse, issues de l'étape réactionnelle a).

4. Procédé selon la revendication 3 **caractérisé en ce que** la phase liquide organique issue de l'étape de séparation b) subit une étape d'hydrogénation dans laquelle ladite phase liquide organique est mise en contact avec un catalyseur d'hydrogénation.

5. Procédé selon l'une des revendications 1 ou 2 **caractérisé en ce que** dans le cas où ladite étape réactionnelle a) est réalisée en deux étapes, une étape de séparation b) est mise en oeuvre entre ladite première étape réactionnelle de déshydratation 1) et ladite deuxième étape réactionnelle d'oligomérisation 2), dans laquelle l'eau contenue dans la phase liquide issue de ladite première étape réactionnelle est séparée de ladite phase gazeuse.

6. Procédé selon la revendication 5 **caractérisé en ce que** la phase liquide organique issue de la deuxième étape réactionnelle d'oligomérisation 2) subit une étape d'hydrogénation dans laquelle ladite phase liquide organique est mise en contact avec un catalyseur d'hydrogénation.

7. Procédé selon l'une des revendications 1 à 6 **caractérisé en ce que** ladite matrice est choisie parmi les éléments du groupe formé par les argiles, la magnésie, les alumines, les silices, les silice-alumines, les aluminates, l'oxyde de titane, l'oxyde de bore, la zircone, les phosphates d'aluminium, les phosphates de titane, les phosphates de zirconium, et le charbon.

8. Procédé selon la revendication 7 **caractérisé en ce que** ladite matrice est choisie parmi les alumines.

## Claims

1. A process for transforming a feed constituted by alcohols containing at least two carbon atoms into a base for a gas oil fuel, **characterized in that** it comprises:
a reaction step a) for bringing the feed to be treated into contact with a catalyst comprising at least one oxide type matrix, at least one IM-5 zeolite, and a metallic phase comprising nickel alone, producing a gas phase, an organic liquid phase and an aqueous liquid phase, said reaction step being either carried out in a single step and operating at a temperature in the range 250°C to 450°C, at a pressure in the range 20 to 100 bar, with an hourly space velocity in the range 0.1 to 5 h⁻¹, or said reaction step being carried out in two steps the two steps being as follows:
- a first dehydration reaction step 1) for bringing the feed to be treated into contact with a dehydration catalyst, operating at a temperature in the range 200°C to 500°C, at a pressure in the range 1 to 50 bar, and at an hourly space velocity in the range 0.1 to 10 h⁻¹, producing a gas phase and a phase which is liquid at 25°C which is primarily composed of water and,
- a second oligomerization reaction step 2) for bringing said gas phase derived from the first reaction step a) into contact with a catalyst comprising at least one oxide type matrix and at least one IM-5 zeolite, producing an organic liquid phase and operating at a temperature in the range 250°C to 450°C, at a pressure in the range 20 to 100 bar, and at an hourly space velocity in the range 0.1 to 5 h⁻¹.

2. A process according to claim 1, **characterized in that** the feed is ethanol.

3. A process according to one of claims 1 or 2, **characterized in that** in the case wherein said reaction step is carried out in a single step, it further comprises a step b) for separating said gas phase, said organic liquid phase and said aqueous liquid phase derived from reaction step a).

4. A process according to claim 3, **characterized in that** the organic liquid phase derived from separation step b) undergoes a hydrogenation step in which said organic liquid phase is brought into contact with a hydrogenation catalyst.

5. A process according to claim 7, **characterized in that** in the case wherein said reaction step is carried out in two steps, a separation step b) is carried out between said first dehydration reaction step 1) and said second oligomerization reaction step 2), in which the water contained in the liquid phase derived from said first reaction step is separated from said gas phase.

6. A process according to claim 5, **characterized in that** the organic liquid phase derived from the second oligomerization reaction step b) undergoes a hydrogenation step in which said organic liquid phase is brought into contact with a hydrogenation catalyst.

7. A process according to one of claims 1 to 6, **characterized in that** said matrix is selected from elements from the group formed by clays, magnesia, aluminas, silicas, silica-aluminas, aluminates, titanium oxide, boron oxide, zirconia, aluminium phosphates, titanium phosphates, zirconium phosphates and coal.

8. A process according to claim 7, **characterized in that** said matrix is selected from aluminas.

## Patentansprüche

1. Verfahren zur Umwandlung einer Beschickung, die aus Alkoholen mit mindestens 2 Kohlenstoffatomen besteht, in einen Grundstoff für Dieselkraftstoff, **dadurch gekennzeichnet, dass** es umfasst:
- einen Reaktionsschritt a) zum Inkontaktbringen der zu behandelnden Beschickung mit einem Katalysator, der mindestens eine Matrix vom Typ Oxid und mindestens einen IM-5-Zeolithen und eine Metallphase umfasst, die ausschließlich Nickel umfasst, der eine gasförmige Phase, eine flüssige organische Phase und eine flüssige wässrige Phase produziert, wobei der Reaktionsschritt entweder in einem einzigen Schritt durchgeführt wird und bei einer Temperatur im Bereich zwischen 250 et 450 °C, unter einem Druck im Bereich zwischen 20 und 100 Bar, mit einer massebezogenen Raumgeschwindigkeit pro Stunde im Bereich zwischen 0,1 und 5 h⁻¹ erfolgt, oder der Reaktionsschritt wird in zwei Schritten durchgeführt, wobei die beiden Schritte Folgende sind:
- ein erster Dehydrierungsreaktionsschritt 1) zum Inkontaktbringen der zu behandelnden Beschickung mit einem Dehydrierungskatalysator, der bei einer Temperatur im Bereich zwischen 200 und 500 °C, unter einem Druck im Bereich zwischen 1 und 50 Bar, mit einer massebezogenen Raumgeschwindigkeit pro Stunde im Bereich zwischen 0,1 und 10 h⁻¹ erfolgt und der eine gasförmige Phase, eine flüssige Phase bei 25 °C, die überwiegend aus Wasser besteht, produziert,
- ein zweiter Oligomerisationsreaktionsschritt 2) zum Inkontaktbringen der gasförmigen Phase, die aus dem ersten Reaktionsschritt a) stammt, mit einem Katalysator, der mindestens eine Matrix vom Typ Oxid und mindestens einen IM-5-Zeolithen, der eine flüssige organische Phase umfasst und bei einer Temperatur im Bereich zwischen 250 und 450 °C, unter einem Druck im Bereich zwischen 20 und 100 Bar, mit einer massebezogenen Raumgeschwindigkeit pro Stunde im Bereich zwischen 0,1 und 5 h⁻¹ erfolgt.

2. Verfahren nach Anspruch 1, **dadurch gekennzeichnet, dass** die Beschickung Ethanol ist.

3. Verfahren nach einem der Ansprüche 1 oder 2, **dadurch gekennzeichnet, dass**, falls der Reaktionsschritt a) in einem einzigen Schritt durchgeführt wird, er außerdem einen Schritt b) zur Trennung der gasförmigen Phase, der flüssigen organischen Phase und der flüssigen Phase, die aus dem Reaktionsschritt a) stammen, umfasst.

4. Verfahren nach Anspruch 3, **dadurch gekennzeichnet, dass** die flüssige organische Phase, die aus dem Schritt zur Trennung b) stammt, einem Hydrierungsschritt unterzogen wird, in dem die flüssige organische Phase mit einem Hydrierungskatalysator in Kontakt gebracht wird.

5. Verfahren nach einem der Ansprüche 1 oder 2, **dadurch gekennzeichnet, dass**, falls der Reaktionsschritt a) in zwei Schritten durchgeführt wird, ein Schritt zur Trennung b) zwischen dem ersten Dehydrierungsreaktionsschritt 1) und dem zweiten Oligomerisationsreaktionsschritt 2) ausgeführt wird, in dem das Wasser, das in der flüssigen Phase, die aus dem ersten Reaktionsschritt stammt, enthalten ist, von der gasförmigen Phase getrennt wird.

6. Verfahren nach Anspruch 5, **dadurch gekennzeichnet, dass** die flüssige organische Phase, die aus dem zweiten Oligomerisationsreaktionsschritt 2) stammt, einem Hydrierungsschritt unterzogen wird, in dem die flüssige organische Phase mit einem Hydrierungskatalysator in Kontakt gebracht wird.

7. Verfahren nach einem der Ansprüche 1 bis 6, **dadurch gekennzeichnet, dass** die Matrix ausgewählt ist aus den Elementen der Gruppe, gebildet aus Tonen, Magnesia, Aluminiumoxiden, Siliciumdioxiden, Siliciumdioxiden-Aluminiumoxiden, Aluminaten, Titanoxid, Boroxid, Zirconium, Aluminiumphosphaten, Titanphosphaten, Zirconiumphosphaten und Kohle.

8. Verfahren nach Anspruch 7, **dadurch gekennzeichnet, dass** die Matrix ausgewählt ist aus den Tonen.
